# EUROPÄISCHE PATENTSCHRIFT

(11) **EP 3 096 299 B1**
(45) Veröffentlichungstag und Bekanntmachung des Hinweises auf die Patenterteilung: **12.10.2022**
(21) Anmeldenummer: 16170876.3
(22) Anmeldetag: 23.05.2016
(51) Int. Cl.: G07C 9/00, H04N 7/18

(54) **SCHLIESSANLAGE UND VERFAHREN ZUM BETRIEB EINER SCHLIESSANLAGE FÜR EINE GEBÄUDETÜR**
LOCKING SYSTEM AND METHOD FOR OPERATING A LOCKING SYSTEM FOR A BUILDING DOOR
INSTALLATION DE FERMETURE ET PROCÉDÉ DE FONCTIONNEMENT D'UNE INSTALLATION DE FERMETURE POUR UNE PORTE DE BATIMENT

(30) Priorität: 21.05.2015 DE 102015108026
(43) Veröffentlichungstag der Anmeldung: 23.11.2016
(73) Patentinhaber: Carl Fuhr GmbH & Co. KG, 42579 Heiligenhaus (DE)
(72) Erfinder: Meis, Guido, 50737 Köln (DE); Tönges, Reiner, 42579 Heiligenhaus (DE)
(74) Vertreter: von dem Borne, Andreas

(56) Entgegenhaltungen:
- WO-A1-2009/088901
- WO-A1-2015/023737
- US-A1- 2010 148 918
- US-A1- 2013 176 107
- US-A1- 2015 035 987
- N.N.: "VORAB - INFORMATION SmartConnect easy - Komfortable Türöffnung mit dem Smartphone", , 1 April 2014 (2014-04-01), pages 1-2, XP055855026, Retrieved from the Internet: URL:http://web.archive.org/web/20150412171 056if_/http://www.fuhr.de:80/fuhr/de/aktue lles/PDFs/Fuhr_down_PI_SmartConnect_easy_D E.pdf [retrieved on 2021-10-26]

## Beschreibung

Die Erfindung betrifft eine Schließanlage für eine Gebäudetür, mit zumindest
- einer Schließeinrichtung, z. B. einem motorbetriebenen Schloss,
- einer Steuerung mit zumindest einem Empfänger für den Empfang eines Öffnungssignals per Funk,
- einer in (Funk-) Reichweite der Steuerung angeordneten Kommunikationseinheit als Netzwerkserver, welche in ein lokales Funknetzwerk eingebunden ist, und welche außerdem einen Sender für die Übermittlung eines Öffnungssignals per Funk an den Empfänger der Steuerung aufweist und
- zumindest einem als Netzwerkclient arbeitenden Endgerät (z. B. einem Smartphone), welches in der Kommunikationseinheit angemeldet wird und mit welchem ein Öffnungsbefehl an die Kommunikationseinheit übermittelt wird, wobei daraufhin von der Kommunikationseinheit ein Öffnungssignal an die Steuerung übermittelt wird.

Schließanlage meint im Rahmen der Erfindung insbesondere eine Türschließanlage einer sicherheitsrelevanten Tür, z. B. einer Eingangstür eines Einfamilienhauses oder Mehrfamilienhauses oder auch eines gewerblich genutzten oder öffentlichen Gebäudes. Eine solche Türschließanlage weist zumindest einen Verriegelungsmechanismus zum Verriegeln und Entriegeln der Tür auf. Ergänzend oder alternativ zu den vorgesehenen mechanischen Zutrittskontrollsystemen (insbesondere Schlüsseln) sind in der Praxis häufig andere Identifizierungsvorrichtungen (Fingerscanvorrichtungen, Transponder, Funkschlüssel oder dergleichen) vorgesehen, so dass sich die Schließanlage auch ohne mechanische Schlüssel von berechtigen Personen öffnen lässt. Dazu ist das Schloss (das z. B. als Mehrfachverriegelung ausgebildet sein kann) motorbetrieben, so dass z. B. ein (separates) Motoraggregat vorgesehen sein kann, mit dem zumindest eine Entriegelung des Schlosses (sowie gegebenenfalls außerdem auch eine Verriegelung) möglich ist. Die Steuerung kann in das Schloss bzw. in das Motoraggregat integriert sein. Bevorzugt handelt es sich um eine separate Steuerung, die im Türblatt oder im Türrahmen angeordnet sein kann und per Kabel oder kabellos den Motor (z. B. zum Entriegeln des Schlosses) ansteuert. In der Steuerung können die verschiedenen zutrittsberechtigten elektronischen Schlüssel (z. B. Funkhandsender, Transponder oder auch berechtigte Nutzer einer Fingerscanvorrichtung) gespeichert sein

Die Funktionalität einer solchen Schließanlage wird dadurch erhöht, dass gleichsam als zusätzlicher elektronischer Schlüssel eine Kommunikationseinheit als Netzwerkserver vorgesehen ist, die - so wie ggf. auch andere elektronische Schlüssel - als "zutrittsberechtigt" in der Steuerung gespeichert wird. Eine solche Kommunikationseinheit wird von der Carl Fuhr GmbH & Co. KG unter der Bezeichnung "SmartConnect" vermarktet. In dieser Kommunikationseinheit können mehrere Endgeräte (z. B. Smartphones) über eine intuitiv zu bedienende App angemeldet werden, so dass über das Smartphone per Funknetzwerk (insbesondere WLAN) mit der Kommunikationseinheit (SmartConnect) kommuniziert wird. Über das Smartphone kann z. B. ein Öffnungsbefehl an die Kommunikationseinheit übermittelt werden, wobei daraufhin von der Kommunikationseinheit (per Funk) ein Öffnungssignal an die Steuerung übermittelt wird. Die Kommunikationseinheit kann in einem separaten Gehäuse mit Netzteil und Netzstecker zur Verfügung gestellt werden. Sie wird z. B. innerhalb des Gebäudes in der Nähe der Tür in eine Netzsteckdose gesteckt und in der Steuerung "angelernt". Anschließend lässt sich dann z. B. per Smartphone die Tür entriegeln, wobei das Smartphone entweder per WLAN mit der Kommunikationseinheit oder gegebenenfalls auch über das Internet und das lokale WLAN kommuniziert. Auf diese Weise können eine Vielzahl von Benutzern sehr einfach verwaltet werden, wobei lediglich eine einzige Kommunikationseinheit in der (herkömmlichen) Steuerung angelernt werden muss. Parallel dazu bleibt aber die Möglichkeit erhalten, das Schloss auch mit herkömmlichen Funkschlüsseln (z. B. Funkhandsendern, Transpondern oder dergleichen), welche in der Steuerung angelernt werden, zu entriegeln. Dieses bekannte System auf der Basis des "Fuhr-SmartConnect" hat sich in der Praxis hervorragend bewährt, es ist jedoch weiter entwicklungsfähig. - Hier setzt die Erfindung ein.

Im Übrigen ist aus der WO 2009/088901A1 ein Verfahren bzw. ein System für eine ferngesteuerte Betätigung verschiedener Geräte bekannt, und zwar unter anderem eine ferngesteuerte Betätigung eines Türschlosses über ein Endgerät, z.B. ein Mobiltelefon. Mit dem Endgerät kann ein Öffnungssignal an eine Kommunikationseinheit übermittelt werden, über welche ein Türschloss bzw. eine Steuerung angesprochen werden kann. Dabei kann ein Nutzer über das Smartphone informiert werden, sofern eine andere Person im Bereich der Tür eine Türklingel betätigt. Der Nutzer des Smartphones hat dann die Möglichkeit, die Tür von der Ferne aus mithilfe des Smartphones zu öffnen.

Die Schrift US 2013/0176107 A1 offenbart eine Schließanlage für eine Gebäudetür, wobei die Schließanlage dazu eingerichtet ist, das Schloss der Gebäudetür nur dann zu entriegeln, wenn der Benutzer zugangsberechtigt ist und sich im Bereich der Gebäudetür befindet.

Der Erfindung liegt die Aufgabe zugrunde, eine Schließanlage für eine Gebäudetür der eingangs beschriebenen Art zu schaffen, welche sich durch weiter verbesserte Sicherheit und Bedienung auszeichnet.

Zur Lösung dieser Aufgabe lehrt die Erfindung eine Schließanlage mit den Merkmalen des Anspruchs 1. Bei der Schließanlage für eine Gebäudetür der eingangs beschriebenen Art ist vorgesehen, dass eine Betätigungseinrichtung im Bereich der Gebäudetür mit einem Sender für die Übermittlung eines Betätigungssignals an die Steuerung vorgesehen ist, wobei mit der Steuerung die Schließeinrichtung betätigbar, z. B. das Schloss entriegelbar ist, sofern sowohl ein Öffnungsbefehl an die Kommunikationseinheit übermittelt wird als auch ein Betätigungssignal von der Betätigungseinrichtung an die Steuerung und ein Betätigungssignal von der Steuerung an die Kommunikationseinheit übermittelt wird. Bei der Betätigungseinrichtung kann es sich z. B. um einen (im Bereich der Tür angeordneten) Taster oder Berührungssensor (z. B. einen Griff) oder auch um einen berührungslos arbeitenden Sensor handeln.

Die Erfindung geht dabei von der Erkenntnis aus, dass sich die Sicherheit einer grundsätzlich bekannten Schließanlage auf der Basis einer WLAN-Kommunikationseinheit durch eine zweistufige Autorisierung der Schlossöffnung weiter verbessern lässt. Denn erfindungsgemäß ist die Schließanlage derart ausgestaltet, dass die Steuerung das Schloss nicht unmittelbar entriegelt, wenn über das Endgerät (z. B. Smartphone) und die Kommunikationseinheit ein Öffnungssignal an die Steuerung übermittelt wird. Vielmehr ist für die Entriegelung außerdem eine Betätigung der Betätigungseinrichtung im Bereich der Gebäudetür erforderlich. Es erfolgt demnach zunächst eine Aktion des autorisierten Benutzers an dem Endgerät, z. B. mit dem Smartphone in einer App, indem eine Taste oder ein Slider betätigt wird. Anschließend muss dann jedoch eine "Vor-Ort-Willensbekundung" erfolgen, z. B. durch eine Taste bzw. Sensor im Türgriff oder in der Griffstange oder an der Tür oder auch durch Betätigung eines (berührungslosen) Bewegungssensors vor der Tür. Die Kommunikationseinheit authentifiziert dabei wie üblich den in der Kommunikationseinheit angemeldeten berechtigten Benutzer (z. B. anhand einer korrekten Kombination aus Benutzername und Passwort). Die vom Benutzer ausgeführte Aktion wird aber erst nach einer weiteren Aktion tatsächlich umgesetzt. Dabei kann es sich um dieselbe Person handeln, die z. B. vor der Eingangstür steht und die Tür über das Smartphone öffnen will. Die Tür entriegelt jedoch nur dann, wenn zusätzlich die Betätigungseinrichtung (z. B. ein Taster an der Tür) betätigt wird. Auf diese Weise wird insbesondere vermieden, dass über ein Endgerät (z. B. Smartphone) versehentlich eine Tür geöffnet wird, ohne dass der Nutzer tatsächlich die Öffnung beabsichtigt. Diese Überlegung trägt der Tatsache Rechnung, dass ein Öffnungsbefehl von dem Smartphone ggf. auch per Internet an die Kommunikationseinheit übertragen werden kann, so dass grundsätzlich auch eine Entriegelung des Schlosses aus der Ferne möglich ist. Die erfindungsgemäße zweistufige Ausgestaltung vermeidet folglich die unbeabsichtigte Entriegelung der Tür während sich der Benutzer an anderem Ort, z. B. im Urlaub, befindet. Dabei ist es möglich, dass die Bestätigung an der Tür von derselben Person durchgeführt wird, die auch den Öffnungsbefehl mit dem Smartphone abgibt. Alternativ liegt es jedoch auch im Rahmen der Erfindung, dass die Betätigung (z. B. am Türgriff) von einer zweiten Person vorgenommen wird. Damit besteht z. B. die Möglichkeit, dass der autorisierte Benutzer, der sich nicht in der Nähe der Tür befindet, per Smartphone (und per Internet) einer anderen (nicht in der Kommunikationseinheit autorisierten) Person Zutritt gewährt. So könnte z. B. aus dem Urlaub einem Nachbarn per Smartphone Zutritt gewährt werden, ohne dass jedoch die Gefahr besteht, dass versehentlich eine Entriegelung bei Betätigung des Smartphones erfolgt. Erfindungsgemäß wird folglich u.a. eine unbeabsichtigte Entriegelung der Tür aus der Ferne verhindert. Dennoch wird eine beabsichtigte Entriegelung nicht behindert und auch nicht entscheidend erschwert, da die zweite Aktion z. B. Teil des üblichen Türöffnungsprozesses sein kann (z. B. Griffstange berühren) und keine wesentliche Zeitverzögerung erzeugt. Die Installation eines Berührungssensors im Bereich der Tür wurde zwar bereits in der DE 10 2010 056 352 A1 vorgeschlagen, dort jedoch im Zusammenhang mit herkömmlichen Transponder-Funkschlüsseln im Sinne eines "Keyless Entry".

Die Kommunikationseinheit bildet einen Netzwerkserver, der mit Aktoren und Sensoren kommuniziert und Informationen für die Kommunikation über ein IP-Netzwerk aufbereitet (Gateway). In der Kommunikationseinheit sind alle relevanten Informationen gespeichert. Die Darstellung und Manipulation der in der Kommunikationseinheit enthaltenen Informationen durch autorisierte Benutzer erfolgt an dem Endgerät, welches als Netzwerkclient arbeitet. Bei diesen "Clients" handelt es sich um Endgeräte mit optischer Anzeige und/oder entsprechenden Eingabemöglichkeiten. Es kann sich um ein Mobiltelefon, insbesondere ein Smartphone, oder um ein Tablet mit Touchdisplay oder auch ein PDA handeln. Alternativ kann auch ein Rechner, z. B. ein Arbeitsplatzrechner, ein Laptop oder ein Notebook (mit Browser) zum Einsatz kommen. Die Kommunikation zwischen Server und Client erfolgt z. B. über das TCP/IP-Protokoll, bevorzugt über WLAN und zweckmäßigerweise verschlüsselt. Eine Datenhaltung im Internet (in einer Cloud) ist nicht zwingend erforderlich.

Das lokale Funknetzwerk ist bevorzugt als WLAN nach dem Standard IEEE 820.11 ausgebildet, welches mit Frequenzen von 2 GHz bis 6 GHz arbeitet. Über dieses lokale Funknetzwerk kommunizieren die Endgeräte mit der Kommunikationseinheit. Die Kommunikation der Kommunikationseinheit mit der Steuerung erfolgt - so wie bei herkömmlichen Funkschlüsseln - per Funk, z. B. in einer Frequenz zwischen 500 MHz und 1000 MHz, z. B. 868,3 MHz. Entsprechend kann auch eine Kommunikation zwischen der Betätigungseinrichtung und der Steuerung und zwischen der Betätigungseinrichtung und der Kommunikationseinheit per Funk erfolgen.

Gegenstand der Erfindung ist auch ein Verfahren zum Betrieb einer solchen Schließanlage für eine Gebäudetür gemäß Anspruch 7, wobei mit zumindest einem als Netzwerkclient arbeitenden Endgerät, welches in der Kommunikationseinheit angemeldet ist, ein Öffnungsbefehl an die Kommunikationseinheit übermittelt wird und wobei daraufhin von der Kommunikationseinheit ein Öffnungssignal an die Steuerung übermittelt wird. Das Verfahren ist dadurch gekennzeichnet, dass die Steuerung das Schloss entriegelt, sofern sowohl der Öffnungsbefehl an die Kommunikationseinheit übermittelt wird als auch ein Betätigungssignal von der Betätigungseinrichtung an die Steuerung und ein Betätigungssignal von der Steuerung an die Kommunikationseinheit übermittelt wird.

In der konkreten, praktischen Umsetzung gibt es verschiedene Möglichkeiten. Im Rahmen der Erfindung erfolgt die (UND)-Verknüpfung von Öffnungssignal einerseits und Betätigungssignal andererseits in der Kommunikationseinheit. Die Steuerung entriegelt das Schloss folglich nur, sofern die Kommunikationseinheit sowohl einen Öffnungsbefehl von einem angemeldeten Endgerät als auch ein Betätigungssignal von der Steuerung empfängt. In diesem Fall ist es nicht mehr erforderlich, in der Steuerung das Vorliegen beider Bedingungen zu prüfen, denn diese Prüfung bzw. (UND)-Verknüpfung erfolgt bereits in der Kommunikationseinheit, das heißt, sofern ein Öffnungssignal von der Kommunikationseinheit an die Steuerung übermittelt wird, erfolgt auch in jedem Fall eine Entriegelung des Schlosses. Die Verknüpfung erfolgt bereits zuvor in der Kommunikationseinheit. Dazu kann die Betätigungseinrichtung ein Betätigungssignal an die Steuerung übermitteln und die Steuerung übermittelt ein Betätigungssignal an die Kommunikationseinheit. Sofern dort außerdem das Öffnungssignal empfangen wird, wird das Öffnungssignal an die Steuerung übermittelt. Stets wird die Prüfung der beiden Bedingungen in der Kommunikationseinheit realisiert. Dieses hat den Vorteil, dass diese Information dann auch optisch angezeigt werden kann, da die Kommunikationseinheit eine entsprechende Information auch an das Endgerät weiterleiten kann. Es kann folglich auch anderen angezeigt werden, dass eine zweistufige Öffnung ausgelöst wurde. Außerdem besteht die Möglichkeit, dass der Benutzer die zweistufige Öffnung im Client auch wieder abbricht, ohne dass eine Kommunikation mit der Steuerung erfolgen muss.

Es liegt außerdem im Rahmen der Erfindung, die Reihenfolge der erforderlichen Handlungen bzw. Signale unterschiedlich auszuwerten bzw. vorzusehen. In einer ersten Alternative wird zunächst mit dem Endgerät ein Öffnungsbefehl erzeugt und die Steuerung entriegelt das Schloss nur dann, wenn daraufhin ein Betätigungssignal (z. B. von einem Taster) übermittelt wird. Gemäß einer zweiten Alternative kann diese Reihenfolge des ersten Schrittes (Aktion des autorisierten Benutzers) und des zweiten Schrittes (Aktion vor Ort) vertauscht werden. Es wird folglich zunächst ein Betätigungssignal an die Kommunikationseinheit übermittelt und von dieser eine entsprechende Nachricht an das Endgerät übermittelt, wobei die Steuerung das Schloss entriegelt, sofern daraufhin ein Öffnungsbefehl von dem Endgerät an die Kommunikationseinheit übermittelt wird. Die Kommunikationseinheit leitet folglich nach Empfang einer Vor-Ort-Aktion diese Information an berechtigte Benutzer (bzw. deren Smartphone) weiter. Dies kann als Anfrage (wie das Klingeln einer Türe) interpretiert werden; dann entscheidet der Benutzer erst anschließend, ob er einen Öffnungsbefehl senden möchte oder nicht. Dieses kann optional durch Audio- und/oder Videoinformationen ergänzt werden. Dazu kann die Kommunikationseinheit nach Empfang einer Vor-Ort-Aktion (das heißt nach Empfang eines Betätigungssignals) z. B. ein Kamerabild an berechtigte Benutzer (bzw. deren Smartphone) senden. Bei dieser Option ist es folglich sinnvoll, wenn im Bereich der Schließanlage im Bereich der Tür eine Videokamera oder ein vergleichbares optisches und/oder akustisches Aufnahmegerät installiert ist.

Die Sicherheit lässt sich weiter dadurch erhöhen, dass die Ausführung einer Aktion nach Erfüllung der beiden genannten Bedingungen zusätzlich durch einen zeitlichen Rahmen begrenzt wird. Das bedeutet, dass die Entriegelung der Steuerung nur erfolgt, wenn die zweite Handlung nach der ersten Handlung innerhalb eines vorgegebenen Zeitfensters erfolgt. Dieses Zeitfenster ist besonders bevorzugt einstellbar und folglich (in Grenzen) frei wählbar, z. B. über das Endgerät, welches dieses Zeitfenster dann in der Kommunikationseinheit hinterlegt. Dieses lässt sich z. B. über einen Timer o. dgl. realisieren, der optional in der App des Endgerätes von einem autorisierten Benutzer einstellbar ist und damit den erlaubten Zeitabstand zwischen den beiden Aktionen definiert. Wird vom Benutzer ein Öffnungsbefehl gesendet, muss z. B. innerhalb von 30 Sekunden die Griffstange an der Tür berührt werden. Wird die Griffstange erst zu einem späteren Zeitpunkt berührt, reagiert das Türschloss bzw. die Kommunikationseinheit darauf nicht. Ebenso reagiert das Schloss optional nicht mehr, nachdem die beiden Bedingungen einmal oder auch mehrfach erfüllt wurden, und zwar auch dann, wenn das entsprechende Zeitfenster noch nicht abgelaufen ist.

Zur verbesserten Benutzerführung ist es optional möglich, dass dem Nutzer vor Ort (z. B. an der Tür) signalisiert wird, dass der autorisierte Benutzer am Endgerät (z. B. am Smartphone) eine Aktion ausgeführt hat. Dazu kann z. B. ein akustisches oder optisches Signal an der Tür (z. B. am Türschloss oder an der Griffstange) erzeugt werden, welches darauf hinweist, dass die Öffnung/ Entriegelung nun freigegeben wurde.

Von besonderer Bedeutung ist im Rahmen der Erfindung folglich die grundsätzlich bekannte Kommunikationseinheit (Fuhr-SmartConnect), deren Funktion erfindungsgemäß unter Berücksichtigung einer Betätigungseinrichtung (z. B. eines Tasters oder dergleichen) erweitert wird. Die Endgeräte (z. B. Smartphones) korrespondieren bevorzugt per WLAN mit der Kommunikationseinheit. Dafür ist kein bestehendes WLAN erforderlich, das WLAN kann auch mit der Kommunikationseinheit aufgebaut werden, die dann als Access Point für die ebenfalls in das Netz eingebundenen Endgeräte arbeitet. Alternativ liegt es auch im Rahmen der Erfindung, dass die Kommunikationseinheit in ein "bestehendes" WLAN-Netz vor Ort integriert wird. Die Endgeräte können dann über das bestehende WLAN bzw. über den bestehenden WLAN-Access Point, mit der Kommunikationseinheit kommunizieren. Ein solches bestehendes WLAN kann insbesondere auch per Internet erreichbar sein, so dass über ein Endgerät (z. B. Smartphone) auch per Internet und über den WLAN-Router des heimischen WLANS eine Kommunikation mit der Kommunikationseinheit möglich ist. In diesem Fall wird der Öffnungsbefehl von dem Endgerät per Internet über die Funknetzsteuerung (Access Point/Router) und von dort über das lokale Funknetz (WLAN) an die Kommunikationseinheit übermittelt.

Ferner besteht die Möglichkeit, dass an der Betätigungseinrichtung ein akustisches oder optisches Signal erzeugt wird. Das bedeutet, dass die Betätigungseinrichtung mit einer akustischen und/oder optischen Anzeige ausgerüstet sein kann. Auf diese Weise besteht die Möglichkeit, dass dem Benutzer angezeigt wird, wenn z. B. mit dem Endgerät ein Öffnungsbefehl an die Kommunikationseinheit übermittelt wurde, so dass dann gezielt die Betätigung der Betätigungseinrichtung erfolgen kann.

Die Erfindung wurde beispielhaft anhand einer bevorzugten Ausführungsform erläutert, bei welcher die Schließanlage als Schließeinrichtung ein motorbetriebenes Schloss aufweist, welches über die Steuerung entriegelbar ist bzw. entriegelt wird. Das bedeutet, dass die Steuerung einen entsprechenden Befehl bzw. ein Signal zum Entriegeln des Schlosses an das Schloss bzw. an den Motor übermittelt. Die Erfindung umfasst aber auch Schließanlagen mit anderen elektrischen bzw. elektronischen Schließeinrichtungen, z. B. mit einem elektronischen Schließzylinder oder einem elektrischen bzw. elektronischen Beschlag. In einem solchen Fall kann die Steuerung diese Schließeinrichtung betätigen, indem z. B. der elektronische Schließzylinder freigeschaltet wird oder indem z. B. bei einem elektronischen Beschlag der Türdrücker freigegeben wird. Die vorstehenden Ausführungsformen lassen sich auch bei einer solchen Schließanlage realisieren.

Im Folgenden wird die Erfindung anhand von Zeichnungen erläutert, die lediglich Ausführungsbeispiele darstellen. Es zeigen
- Fig. 1: schematisch vereinfacht eine Schließanlage in einer nicht von Anspruch 1 bzw. 7 erfassten Ausführungsform,
- Fig. 2: eine Schließanlage in einer erfindungsgemäßen Ausführungsform und
- Fig. 3: den Gegenstand nach Fig. 2 in einer abgewandelten, nicht von Anspruch 1 bzw. 7 erfassten Ausführungsform.

In den Figuren ist eine Schließanlage für eine Gebäudetür 1 mit einem motorbetriebenen Schloss 2 und einer Steuerung 3 dargestellt. Bei dem motorbetriebenen Schloss 2 handelt es sich besonders bevorzugt um eine Mehrfachverriegelung mit Zentralschloss und einer oder mehreren Zusatzverriegelungen, welche über Treibstangen mit dem Zentralschloss verbunden sind. Das Schloss 2 ist mit einem Motor ausgerüstet. Dazu kann bevorzugt ein (separates) Motoraggregat 4 vorgesehen sein, welches ebenfalls über die Treibstangen mit der Zentralverriegelung und/oder den Zusatzverriegelungen verbunden ist. Über dem Motor erfolgt zumindest eine Entriegelung des Schlosses 2. Die Verriegelung kann optional im Sinne einer Selbstverriegelung mechanisch erfolgen (halbmotorisches Schloss). Die Erfindung umfasst aber auch vollmotorische Schlösser, bei denen über den Motor sowohl die Verriegelung als auch die Entriegelung erfolgt. Die Steuerung 3 kann unmittelbar am Schloss (z. B. an oder in der Motoreinheit) angeordnet sein. Sie kann jedoch auch als (separate) Steuerung am Türblatt oder am Türrahmen angeordnet sein und z. B. kabelgebunden mit dem Schloss bzw. dem Motoraggregat 4 verbunden sein.

In der Steuerung 3 können mehrere (nicht dargestellte) elektronische Schlüssel (z. B. Funk-Handsender, Transponder, Funk-Fingerscanner oder dergleichen) gespeichert werden, mit welchen sich das Schloss 2 (von zutrittsberechtigen Personen) entriegeln lässt. Dazu kommunizieren solche Funkschlüssel per Funk mit der Steuerung, indem sie ein Öffnungssignal per Funk an die Steuerung 3 übermitteln. In der Praxis wird dabei z. B. mit einer Frequenz von 868,3 MHz gearbeitet. Der Einsatz solcher Funkschlüssel und die Kommunikation mit der Steuerung 3 ist bekannt.

Erfindungsgemäß ist in Funkreichweite der Steuerung 3 eine Kommunikationseinheit 5 angeordnet, die als Netzwerkserver dient und in ein lokales Funknetzwerk eingebunden ist. Eine solche Kommunikationseinheit 5 weist außerdem einen Sender für die Übermittlung eines Öffnungssignals 6 per Funk an den Empfänger der Steuerung 3 auf. Außerdem weist die Kommunikationseinheit 5 bevorzugt einen Empfänger für den Empfang von Funksignalen auf, z. B. von der Steuerung 3. Eine solche Kommunikationseinheit 5 lässt sich folglich wie ein Funkschlüssel in der Steuerung als "berechtigter Benutzer" hinterlegen. Dazu können ein oder mehrere Endgeräte 7 (z. B. Smartphones), die als Netzwerkclients arbeiten, in der Kommunikationseinheit 5 angemeldet werden. Mit Hilfe eines solchen Endgerätes 7 kann ein Öffnungsbefehl 8 an die Kommunikationseinheit 5 übermittelt werden, wobei daraufhin von der Kommunikationseinheit 5 ein Öffnungssignal 6 an die Steuerung 3 übermittelt wird. Die Kommunikation zwischen dem Endgerät 7 und der Kommunikationseinheit 5 erfolgt dabei über die WLAN-Technik. In dem Endgerät 7 (z. B. Smartphone) ist eine geeignete Anwendungssoftware (z. B. eine App) installiert, über welche eine einfache Bedienung und insbesondere Benutzerverwaltung möglich wird. So können eine Vielzahl von Endgeräten 7 in der Kommunikationseinheit 5 angelernt und über die Endgeräte 7 verwaltet werden. So lassen sich individuelle Nutzungen festlegen und auch temporäre Vorgaben bzw. Sperrungen realisiert werden. Die Sicherheit wird auch dadurch erhöht, dass Betätigungen und Einstellungsänderungen in einem Journal protokolliert werden. Bei der Kommunikationseinheit 5 handelt es sich um ein separat zur Verfügung gestelltes WLAN-Modul, welches bevorzugt mit einem Netzgerät ausgerüstet ist und in einfacher Weise in eine Netz-Steckdose 9 in der Nähe der Tür gesteckt wird.

Erfindungsgemäß ist nun zusätzlich eine Betätigungseinrichtung 10 (z. B. ein Taster oder Sensor an der Tür oder in der Nähe der Tür) vorgesehen, wobei diese Betätigungseinrichtung 10 einen Sender für die Übermittlung eines Betätigungssignals 11 an die Steuerung oder an die Kommunikationseinheit 5 aufweist. Dadurch lässt sich die Sicherheit der bekannten Schließanlage verbessern, denn die Steuerung 3 entriegelt das Schloss nur dann, wenn sowohl ein Öffnungsbefehl 8 von dem Endgerät 7 an die Kommunikationseinheit 5 übermittelt wird als auch ein Betätigungssignal 11 von der Betätigungseinrichtung 10 an die Steuerung 3 oder an die Kommunikationseinheit 5 übermittelt wird. Das Schloss 2 wird folglich nicht bereits dann entriegelt, wenn ein berechtigter Benutzer einen Öffnungsbefehl 8 über z. B. ein Smartphone an die Kommunikationseinheit (SmartConnect) übermittelt. Vielmehr ist für die Entriegelung außerdem eine "Vor-Ort-Willensbekundung" erforderlich, in dem z. B. eine Taste an der Tür oder im Türgriff oder eine Berührung der Griffstange 10 erforderlich wird.

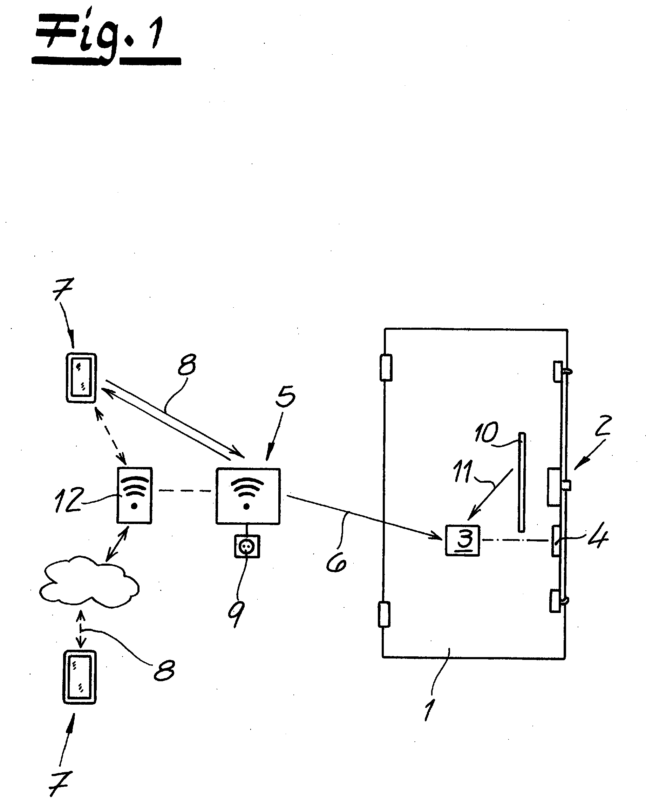

Dazu zeigt Fig. 1 eine nicht von Anspruch 1 bzw. 7 erfasste Ausführungsform der Erfindung, bei welcher die Überprüfung der erforderlichen Bedingungen im Sinne einer (UND)-Verknüpfung in der Steuerung 3 erfolgt. Es ist erkennbar, dass über das Endgerät 7 (z. B. das Smartphone) ein Öffnungsbefehl 8 an die Kommunikationseinheit 5 übermittelt wird. In dieser Kommunikationseinheit 5 ist das entsprechende Endgerät 7 eines autorisierten Benutzers angemeldet. Der Öffnungsbefehl 8 kann entweder unmittelbar über WLAN an die Kommunikationseinheit (als Access Point) oder aber auch über den WLAN Access Point 12 (falls vorhanden) an die Kommunikationseinheit 5 übermittelt werden. Alternativ besteht die Möglichkeit, dass der Nutzer (z. B. aus dem Urlaub) einen Öffnungsbefehl 8 per Internet an das heimische WLAN und damit an die Kommunikationseinheit 5 übermittelt. Diese Optionen sind in Fig. 1 dargestellt. Daraufhin übermittelt die Kommunikationseinheit 5 ein Öffnungssignal 6 an die Steuerung 3. Die Entriegelung des Schlosses 2 erfolgt jedoch nur dann, wenn außerdem ein Betätigungssignal 11 von der Betätigungseinrichtung 10 an die Steuerung 3 übermittelt wird. In diesem Fall erfolgt die Verknüpfung von Öffnungssignal 6 einerseits und Betätigungssignal 11 andererseits folglich in der Steuerung 3. Sofern beide Bedingungen erfüllt sind, erzeugt die Steuerung 3 einen Entriegelungsimpuls für das Schloss 2 bzw. für den Motor 4 des Schlosses.

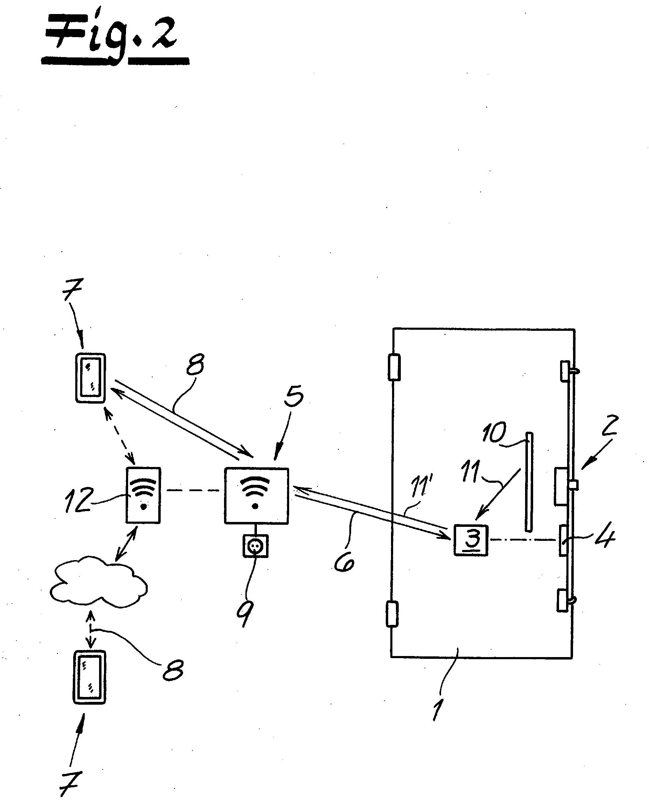

Fig. 2 zeigt demgegenüber eine erfindungsgemäße Ausführungsform der Erfindung, bei welcher die Überprüfung der (UND)-Verknüpfung (Öffnungsbefehl des Endgeräts einerseits und Betätigungssignal der Betätigungseinrichtung andererseits) nicht in der Steuerung 3, sondern in der Kommunikationseinheit 5 durchgeführt wird. Die Kommunikationseinheit 5 sendet folglich nur dann ein Öffnungssignal 6 an die Steuerung 3, wenn sie sowohl einen Öffnungsbefehl 8 von dem Endgerät 7 als auch ein Betätigungssignal 11 von der Betätigungseinrichtung 10 empfängt.

Diese zweite Alternative lässt sich auf verschiedene Weise realisieren. Gemäß Fig. 2 wird das Betätigungssignal 11 von der Betätigungseinrichtung 10 zunächst an die Steuerung 3 übermittelt und von dort sendet die Steuerung ein Betätigungssignal 11' an die Kommunikationseinheit 5.

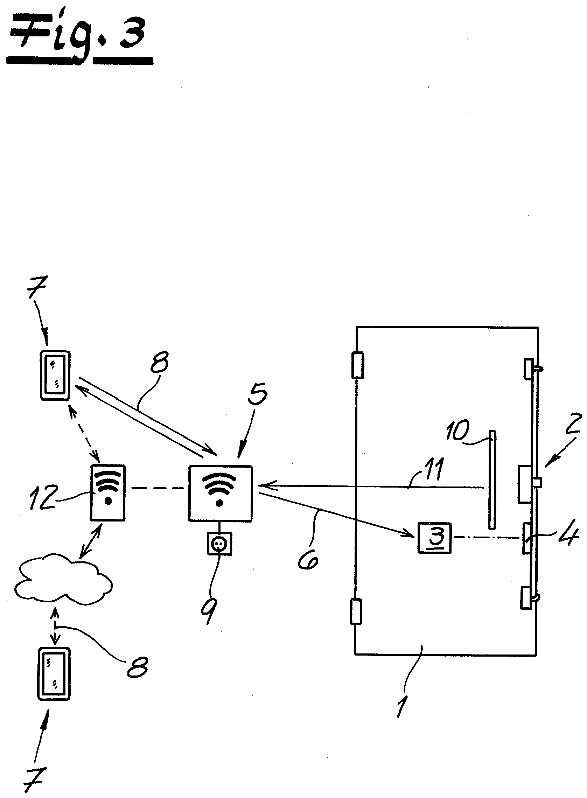

Demgegenüber zeigt Fig. 3 eine nicht von Anspruch 1 bzw. 7 erfasste Variante, bei welcher die Betätigungseinrichtung 10 das Betätigungssignal 11 nicht an die Steuerung 3, sondern (unmittelbar) an die Kommunikationseinheit 5 übermittelt. Die Kommunikationseinheit kann folglich das Vorliegen der beiden Bedingungen (Öffnungsbefehl einerseits und Betätigungssignal andererseits) in der Kommunikationseinheit 5 prüfen, und zwar entweder mit Einbindung der Steuerung 3 (Fig. 2) oder ohne Einbindung der Steuerung (Fig. 3).

Dabei gibt es bei sämtlichen Ausführungsformen nach Fig. 1, 2 und 3 verschiedene Möglichkeiten, den zeitlichen Ablauf vorzugeben. So besteht in einer "ersten Reihenfolge" die Möglichkeit, dass zunächst mit dem Endgerät 7 ein Öffnungsbefehl 8 erzeugt wird und dass die Steuerung 3 das Schloss entriegelt, sofern daraufhin ein Betätigungssignal 11 erzeugt bzw. übermittelt wird. Der Öffnungsvorgang wird hier folglich durch eine Handlung über das Endgerät 7 ausgelöst und nur dann umgesetzt, wenn eine Bestätigung über die Betätigungseinrichtung 10 erfolgt. Die Sicherheit kann dadurch erhöht werden, dass die Handlungen innerhalb eines bestimmten Zeitfensters vorgenommen werden müssen, so dass der Öffnungsbefehl 8 mit dem Endgerät 7 ein Zeitfenster vorgibt. Das Schloss 2 wird nur dann entriegelt, wenn das Betätigungssignal 11 innerhalb dieses Zeitfensters (z. B. 30 Sekunden) erzeugt wird.

Alternativ kann in einer "zweiten Reihenfolge" der Entriegelungsvorgang über die Betätigungseinrichtung 10 (z. B. den Taster oder die Griffstange) ausgelöst werden. Sobald die Kommunikationseinheit 5 ein Betätigungssignal 11, 11' nach einer "Vor-Ort-Aktion" empfängt, wird diese Information an das Endgerät 7 bzw. an die Endgeräte der berechtigen Benutzer weitergeleitet. Die Steuerung 3 entriegelt das Schloss nur dann, wenn daraufhin, z. B. innerhalb eines vorgegebenen Zeitfensters, ein Öffnungsbefehl 8 von dem Endgerät 7 an die Kommunikationseinheit 5 übermittelt wird. Die beiden Optionen "Reihenfolge 1" und "Reihenfolge 2" können bei allen Varianten nach den Fig. 1, 2 und 3 realisiert werden.

In den Figuren ist gezeigt, dass die Kommunikationseinheit 5 als WLAN-Access Point mit dem Endgerät 7 kommunizieren kann, ohne dass ein "bestehendes" WLAN zur Verfügung stehen muss. Über das Endgerät kann der Nutzer in den WLAN-Einstellungen das Endgerät mit der Kommunikationseinheit 5 verbinden und dann über die App ohne Einschränkungen darauf zugreifen. So kann eine schnelle und einfache Nutzung ohne bestehendes WLAN erfolgen.

Alternativ ist jedoch in den Figuren auch gezeigt, dass die Kommunikationseinheit in ein bestehendes WLAN mit Access Point/Router integriert wird.

## Patentansprüche

1. Schließanlage für eine Gebäudetür (1), mit zumindest
- einer Schließeinrichtung, z. B. einem motorbetriebenen Schloss (2),
- einer Steuerung (3) mit zumindest einem Empfänger für den Empfang eines Öffnungssignals (6) per Funk,
- einer in Reichweite der Steuerung (3) angeordneten Kommunikationseinheit (5) als Netzwerkserver, welche in ein lokales Funknetzwerk eingebunden ist und welche außerdem einen Sender für die Übermittlung eines Öffnungssignals (6) per Funk an den Empfänger der Steuerung (3) aufweist und
- zumindest einem als Netzwerkclient arbeitenden Endgerät (7), welches in der Kommunikationseinheit (5) angemeldet wird und das dazu eingerichtet ist, durch eine Aktion eines Benutzers ein Öffnungsbefehl (8) an die Kommunikationseinheit (5) zu übermitteln, wobei die Kommunikationseinheit (5) dazu eingerichtet ist, daraufhin ein Öffnungssignal (6) an die Steuerung (3) zu übermitteln,
**dadurch gekennzeichnet, dass** eine Betätigungseinrichtung (10) im Bereich der Gebäudetür (1) mit einem Sender für die Übermittlung eines Betätigungssignals (11) an die Steuerung (3) vorgesehen ist,
wobei die Kommunikationseinheit (5) derart eingerichtet ist, durch die Aktion des Benutzers an dem Endgerät mit der Steuerung (3) die Schließeinrichtung nur dann zu betätigen, z. B. das Schloss (2) zu entriegeln, sofern sowohl ein Öffnungsbefehl (8) an die Kommunikationseinheit (5) als auch ein Betätigungssignal (11) von der Betätigungseinrichtung (10) an die Steuerung (3) und ein Betätigungssignal (11') von der Steuerung (3) an die Kommunikationseinheit (5) übermittelt worden ist,
wobei die Kommunikationseinheit (5) dazu eingerichtet ist, eine Überprüfung einer UND-Verknüpfung aus Öffnungsbefehl (8) und Betätigungssignal (11') durchzuführen.

2. Schließanlage nach Anspruch 1, **dadurch gekennzeichnet, dass** das Endgerät (7) mit einer optischen Anzeige und einer Eingabemöglichkeit ausgerüstet ist, z. B. als Mobiltelefon, vorzugsweise Smartphone, als Personal Digital Assistent (PDA), als Tablet PC oder als Rechner, z.B. Arbeitsplatzrechner, Laptop oder Notebook, ausgebildet ist.

3. Schließanlage nach Anspruch 1 oder 2, **dadurch gekennzeichnet, dass** die Betätigungseinrichtung (10) als Taster, Berührungssensor, berührungsloser Sensor oder als Identifizierungseinheit mit Identifizierungsabfrage ausgebildet ist.

4. Schließanlage nach einem der Ansprüche 1 bis 3, **dadurch gekennzeichnet, dass** die Kommunikationseinheit (5) dazu eingerichtet ist, mit dem Endgerät via TCP/IP zu kommunizieren.

5. Schließanlage nach einem der Ansprüche 1 bis 4, **dadurch gekennzeichnet, dass** das lokale Funknetzwerk als WLAN nach dem Standard IEEE 820.11, z.B. mit Frequenzen von 2 GHz bis 6 GHz, ausgebildet ist.

6. Schließanlage nach einem der Ansprüche 1 bis 5, **dadurch gekennzeichnet, dass** die Signale zwischen Kommunikationseinheit (5) und Steuerung (3) und/ oder zwischen Betätigungseinrichtung (10) und Steuerung (3) und/oder zwischen Betätigungseinrichtung (10) und Kommunikationseinheit (5) per Funk, z. B. mit einer Frequenz von 868,3 MHz, übermittelt werden.

7. Verfahren zum Betrieb einer Schließanlage für eine Gebäudetür (1) nach einem der Ansprüche 1 bis 6,
wobei mit zumindest einem als Netzwerkclient arbeitenden Endgerät (7), welches in der Kommunikationseinheit (5) angemeldet wird, durch eine Aktion eines Benutzers ein Öffnungsbefehl (8) an die Kommunikationseinheit (5) übermittelt wird und wobei daraufhin von der Kommunikationseinheit (5) ein Öffnungssignal (6) an die Steuerung (3) übermittelt wird, **dadurch gekennzeichnet, dass**
die Steuerung (3) die Schließeinrichtung nur dann betätigt, sofern sowohl der Öffnungsbefehl (8) an die Kommunikationseinheit (5) übermittelt wird als auch ein Betätigungssignal (11) von der Betätigungseinrichtung (10) an die Steuerung (3) und ein Betätigungssignal (11') von der Steuerung (3) an die Kommunikationseinheit (5) übermittelt wird,
wobei eine Überprüfung einer UND-Verknüpfung aus Öffnungsbefehl (8) und Betätigungssignal (11') in der Kommunikationseinheit (5) durchgeführt wird.

8. Verfahren nach Anspruch 7, **dadurch gekennzeichnet, dass** zunächst mit dem Endgerät (7) ein Öffnungsbefehl (8) erzeugt wird und dass die Steuerung (3) die Schließeinrichtung betätigt bzw. das Schloss (2) entriegelt, sofern daraufhin innerhalb eines vorgegebenen Zeitfensters ein Betätigungssignal (11, 11') übermittelt wird.

9. Verfahren nach einem der Ansprüche 7 bis 8, **dadurch gekennzeichnet, dass** zunächst ein Betätigungssignal ( 11') an die Kommunikationseinheit (5)
übermittelt und von dieser eine entsprechende Nachricht an das Endgerät (7) übermittelt wird und dass die Steuerung (3) die Schließeinrichtung betätigt bzw. das Schloss (2) entriegelt, sofern daraufhin innerhalb eines vorgegebenen Zeitfensters ein Öffnungsbefehl (8) von dem Endgerät (7) an die Kommunikationseinheit (5) übermittelt wird.

10. Verfahren nach Anspruch 8 oder 9, **dadurch gekennzeichnet, dass** das Zeitfenster über das Endgerät (7) ausgewählt und in der Kommunikationseinheit (5) gespeichert wird.

11. Verfahren nach einem der Ansprüche 8 bis 10, **dadurch gekennzeichnet, dass** an der Betätigungseinrichtung (10) ein akustisches oder optisches Signal erzeugt wird.

## Claims

1. A locking system for a building door (1), having at least
- a locking device, e.g. a motorised lock (2),
- a controller (3) with at least one receiver for receiving an opening signal (6) by radio,
- a communication unit (5), in the form of a network server, which is situated within range of the controller (3) and is integrated in a local radio network and also has a transmitter for transmitting an opening signal (6) by radio to the receiver of the controller (3), and
- at least one terminal (7) which operates as a network client and is logged into the communication unit (5) and is configured to transmit an opening command (8) to the communication unit (5) as a result of an action of a user, the communication unit (5) being configured thereupon to transmit an opening signal (6) to the controller (3),
**characterised in that** an actuation device (10) with a transmitter for transmitting an actuation signal (11) to the controller (3) is provided in the region of the building door (1),
wherein the communication unit (5) is configured to actuate the locking device, e.g. to unlock the lock (2), using the controller (3) as a result of the action of the user on the terminal only when an opening command (8) has been transmitted to the communication unit (5) and an actuation signal (11) has been transmitted from the actuation device (10) to the controller (3) and an actuation signal (11') has been transmitted from the controller (3) to the communication unit (5), wherein the communication unit (5) is configured to carry out a check of an AND operation of the opening command (8) and the actuation signal (11').

2. The locking system according to Claim 1, **characterised in that** the terminal (7) is equipped with an optical display and an input facility, e.g. is designed as a mobile telephone, preferably smartphone, as a personal digital assistant (PDA), as a tablet PC or as a computer, e.g. a desktop computer, laptop or notebook.

3. The locking system according to Claim 1 or 2, **characterised in that** the actuation device (10) is designed as a button, touch sensor, contactless sensor or as an identification unit with an identification request.

4. The locking system according to any one of Claims 1 to 3, **characterised in that** the communication unit (5) is configured to communicate with the terminal via TCP/IP.

5. The locking system according to any one of Claims 1 to 4, **characterised in that** the local radio network is designed as a WLAN according to standard IEEE 820.11, e.g. with frequencies of 2 GHz to 6 GHz.

6. The closing system according to any one of Claims 1 to 5, **characterised in that** the signals between the communication unit (5) and the controller (3) and/or between the actuation device (10) and the controller (3) and/or between the actuation device (10) and the communication unit (5) are transmitted by radio, e.g. at a frequency of 868.3 MHz.

7. A method for operating a locking system for a building door (1) according to any one of Claims 1 to 6,
in which an opening command (8) is transmitted to the communication unit (5) using at least one terminal (7) which operates as a network client and is logged into the communication unit (5), as a result of an action of a user, and in which an opening signal (6) is thereupon transmitted from the communication unit (5) to the controller (3), **characterised in that**
the controller (3) actuates the locking device only when the opening command (8) is transmitted to the communication unit (5) and an actuation signal (11) is transmitted from the actuation device (10) to the controller (3) and an actuation signal (11') is transmitted from the controller (3) to the communication unit (5),
wherein a check of an AND operation of the opening command (8) and the actuation signal (11') is carried out in the communication unit (5).

8. The method according to Claim 7, **characterised in that** an opening command (8) is generated using the terminal (7) first, and the controller (3) actuates the locking device or unlocks the lock (2) if an actuation signal (11, 11') is transmitted thereupon within a predefined time window.

9. The method according to any one of Claims 7 to 8, **characterised in that** an actuation signal (11') is transmitted to the communication unit (5) first, and a corresponding message is transmitted from this to the terminal (7), and the controller (3) actuates the locking device or unlocks the lock (2) if an opening command (8) is transmitted from the terminal (7) to the communication unit (5) thereupon within a predefined time window.

10. The method according to Claim 8 or 9, **characterised in that** the time window is selected via the terminal (7) and stored in the communication unit (5).

11. The method according to any one of Claims 8 to 10, **characterised in that** an acoustic or optical signal is generated at the actuation device (10).

## Revendications

1. Système de verrouillage d'une porte de bâtiment (1), pourvu d'au moins
- un dispositif de verrouillage, par exemple une serrure (2) actionnée par moteur,
- un dispositif de commande (3), doté d'un récepteur pour la réception radio d'un signal d'ouverture (6),
- une unité de communication (5) placée dans la portée du dispositif de commande (3), faisant office de serveur de réseau, laquelle est intégrée dans un réseau sans fil local et laquelle comporte en outre un émetteur pour la transmission radio d'un signal d'ouverture (6) au récepteur du dispositif de commande (3) et
- au moins un terminal (7), fonctionnant en tant que client réseau, que l'on enregistre dans l'unité de communication (5) et qui est aménagé pour transmettre par une action d'un utilisateur une instruction d'ouverture (8) à l'unité de communication (5), l'unité de communication (5) étant aménagée pour transmettre par la suite un signal d'ouverture (6) au dispositif de commande (3),
**caractérisé en ce qu'**un dispositif d'actionnement (10) est prévu dans la zone de la porte de bâtiment (1), avec un émetteur pour la transmission d'un signal d'actionnement (11) au dispositif de commande (3),
l'unité de communication (5) étant aménagée de sorte à n'actionner le dispositif de verrouillage, par exemple à déverrouiller la serrure (2) sous l'action de l'utilisateur sur le terminal avec le dispositif de commande (3), uniquement si aussi bien une instruction d'ouverture (8) a été transmise à l'unité de communication (5), qu'également un signal d'actionnement (11) a été transmis par le dispositif d'actionnement (10) au dispositif de commande (3) et un signal d'actionnement (11') a été transmis par le dispositif de commande (3) à l'unité de communication (5),
l'unité de communication (5) étant aménagée pour procéder à une vérification d'une combinaison logique ET de l'instruction d'ouverture (8) et du signal d'actionnement (11').

2. Système de verrouillage selon la revendication 1, **caractérisé en ce que** le terminal (7) est équipé d'un affichage optique et d'un moyen de saisie, par exemple sous la forme d'un téléphone mobile, de préférence d'un Smartphone, faisant office de Personal Digital Assistent (PDA), d'une tablette PC ou d'un ordinateur, par exemple d'un ordinateur fixe, d'un ordinateur portable ou d'un Notebook.

3. Système de verrouillage selon la revendication 1 ou 2, **caractérisé en ce que** le dispositif d'actionnement (10) est conçu sous la forme d'un clavier, d'un capteur tactile, d'un capteur sans contact, ou d'une unité d'identification dotée d'une interrogation d'identification.

4. Système de verrouillage selon l'une quelconque des revendications 1 à 3, caractérisé en ce l'unité de communication (5) est aménagée pour communiquer avec le terminal via protocole TCP/IP.

5. Système de verrouillage selon l'une quelconque des revendications 1 à 4, **caractérisé en ce que** le réseau sans fil local est conçu sous la forme d'un WLAN selon le standard IEEE 820.11, par exemple avec des fréquences de 2 GHz à 6 GHz.

6. Système de verrouillage selon l'une quelconque des revendications 1 à 5, **caractérisé en ce que** les signaux entre l'unité de communication (5) et le dispositif de commande (3) et / ou entre le dispositif d'actionnement (10) et le dispositif de commande (3) et /ou entre le dispositif d'actionnement (10) et l'unité de communication (5) sont transmis par radio, par exemple à une fréquence de 868,3 MHz.

7. Procédé opérationnel d'un système de verrouillage d'une porte de bâtiment (1) selon l'une quelconque des revendications 1 à 6,
à l'aide d'au moins un terminal (7) fonctionnant en tant que client réseau, que l'on enregistre dans l'unité de communication (5), par une action d'un utilisateur, une instruction d'ouverture (8) étant transmise à l'unité de communication (5) et suite à quoi, l'unité de communication (5) transmettant un signal d'ouverture (6) au dispositif de commande (3), **caractérisé en ce que**
le dispositif de commande (3) n'actionnant le dispositif de verrouillage que si aussi bien l'instruction d'ouverture (8) est transmise à l'unité de communication (5), qu'également un signal d'actionnement (11) est transmis par le dispositif d'actionnement (10) au dispositif de commande (3) et un signal d'actionnement (11') est transmis par le dispositif de commande (3) à l'unité de communication (5),
une vérification d'une combinaison logique ET de l'instruction d'ouverture (8) et du signal d'actionnement (11') étant réalisée dans l'unité de communication (5).

8. Procédé selon la revendication 7, **caractérisé en ce que** d'abord à l'aide du terminal (7), une instruction d'ouverture (8) est générée et **en ce que** le dispositif de commande (3) actionne le dispositif de verrouillage ou déverrouille la serrure (2) si suite à cela, dans une fenêtre de temps prédéfinie, un signal d'actionnement (11, 11') est transmis.

9. Procédé selon l'une quelconque des revendications 7 à 8, **caractérisé en ce que** d'abord un signal d'actionnement (11') est transmis à l'unité de communication (5) et par celle-ci, un message correspondant est transmis au terminal (7) et **en ce que** le dispositif de commande (3) actionne le dispositif de verrouillage ou déverrouille la serrure (2) si suite à cela, dans une fenêtre de temps prédéfinie, une instruction d'ouverture (8) est transmise par le terminal (7) à l'unité de communication (5).

10. Procédé selon la revendication 8 ou 9, **caractérisé en ce que** la fenêtre de temps est sélectionnée via le terminal (7) et mémorisée dans l'unité de communication (5).

11. Procédé selon l'une quelconque des revendications 8 à 10, **caractérisé en ce que** sur le dispositif d'actionnement (10) est généré un signal acoustique ou optique.
